# EUROPÄISCHE PATENTSCHRIFT

(11) **EP 1 633 822 B1**
(45) Veröffentlichungstag und Bekanntmachung des Hinweises auf die Patenterteilung: **24.01.2007**
(21) Anmeldenummer: 04739816.9
(22) Anmeldetag: 11.06.2004
(51) Int. Cl.: C09D 7/12, C10M 141/02, C10M 173/02

(54) **ANTIADHÄSIVE HOCHTEMPERATURSCHICHTEN**
ANTIADHESIVE HIGH TEMPERATURE LAYERS
COUCHES ANTIADHESIVES RESISTANT AUX TEMPERATURES ELEVEES

(30) Priorität: 13.06.2003 DE 10326815
(43) Veröffentlichungstag der Anmeldung: 15.03.2006
(73) Patentinhaber: Leibniz-Institut für Neue Materialien gemeinnützige GmbH, 66123 Saarbrücken (DE)
(72) Erfinder: ASLAN, Mesut, 66989 Höheischweiler (DE); DRUMM, Robert, 66113 Saarbrücken (DE); ENDRES, Klaus, 66424 Homburg (DE); NAIR, Hareesh, Hyderabad - 500 005 (A.P.) (IN); REINHARD, Bernd, 66663 Merzig-Brotdorf (DE); SCHMIDT, Helmut, 66130 Saarbrücken-Güdingen (DE)
(74) Vertreter: Barz, Peter
(86) Internationale Anmeldenummer: PCT/EP2004/006326
(87) Internationale Veröffentlichungsnummer: WO 2004/110671

(56) Entgegenhaltungen:
- WO-A-00/53702
- WO-A-02/090474

## Beschreibung

Die Erfindung betrifft ein Substrat mit einer antiadhäsiven Beschichtung auf Basis einer Beschichtungszusammensetzung, die a) Feststoffteilchen von einem Trennmittel, ausgenommen Bornitrid,und b) ein Bindemittel umfassend oberflächenmodifizierte nanoskalige Feststoffteilchen umfasst.

Temperaturbeständige Antihaftbeschichtungen sind für technische Anwendungen von hoher Bedeutung. Werkstoffe, die solche Antihafteigenschaften aufweisen, sind nach dem Stand der Technik bekannt. Dies sind sehr häufig Materialien mit einer ausgeprägten Schichtstruktur und besonderen elektronischen Eigenschaften wie Graphit, aber auch bestimmte Sulfide wie Wolfram- oder Molybdänsulfid. Das Aufbringen dieser Werkstoffe auf Oberflächen ist jedoch besonders schwierig, da z.B. Graphit nur sehr schwer oder gar nicht auf Oberflächen abgeschieden werden kann. Ein Ausweg besteht in der Verwendung von Bindemitteln, die in der Lage sind, z.B. Graphitpartikel festhaftend auf Oberflächen zu binden. Wegen der Antihafteigenschaft von Graphit ist dies in aller Regel aber nur mit organischen Polymeren möglich, die jedoch nicht hochtemperaturstabil sind.

WO 02/090474 beschreibt eine Beschichtungszusammensetzung auf einem Substrat bestehend aus (a) Feststoffteilchen von wachsartigem Gleitmittel und (b) Feststoffharzteilchen.

Die Aufgabe bestand in der Bereitstellung antiadhäsiver Beschichtungen, die auch bei hohen Temperaturen stabil sind. Die Lösung der erfindungsgemäßen Aufgabe konnte in überraschender Weise durch ein Bindemittel erreicht werden, das oberflächenmodifizierte nanoskalige Feststoffteilchen umfasst. Dementsprechend betrifft die vorliegende Erfindung ein Substrat mit einer antiadhäsiven Beschichtung, erhältlich durch Auftragen einer Beschichtungszusammensetzung auf ein Substrat und Härten, wobei die Beschichtungszusammensetzung umfasst
a) Feststoffteilchen von einem Trennmittel, ausgenommen Bornitrid, und
b) ein Bindemittel umfassend oberflächenmodifizierte nanoskalige Feststoffteilchen.

Der überraschende Effekt dabei ist, dass oberflächenmodifizierte nanoskalige Feststoffteilchen (nanoskalige Feststoffteilchen werden im folgenden auch als Nanopartikel bezeichnet) eine adhäsive Wirkung sowohl zu sehr unpolaren Oberflächen, wie z.B. die des Graphits, als auch zu polaren Oberflächen, z.B. ein Substrat, entwickeln können. Sie zeigen eine ausgeprägte bifunktionelle Eigenschaft.

Aufgrund dieser bifunktionellen Eigenschaft ist es nun möglich, Suspensionen von Graphit oder anderen Trennmittelteilchen in organischen Lösungsmitteln, aber auch in wässrigen Systemen, herzustellen und diese als Beschichtungszusammensetzungen auf verschiedenen Substratmaterialien, wie Metallen, Glas und Keramik zu verwenden. Beschichtungen auf Kunststoffen sind ebenso möglich, jedoch ist ein Hochtemperatureinsatz dann selbstverständlich nur im Rahmen der meist begrenzten Temperaturbeständigkeit des Substrats möglich.

Weiterhin ist überraschend, dass die antiadhäsive Wirkung des Trennmittels in solchen Beschichtungen bestehen bleibt, d. h., die zur Atmosphäre gerichteten Teile des Trennmittels, z.B. von Graphit, werden von dem Bindemittel nicht vollständig umhüllt.

Im folgenden wird die Erfindung ausführlich erläutert.

Die erfindungsgemäß verwendete Beschichtungszusammensetzung umfasst Feststoffteilchen von einem Trennmittel, ausgenommen Bornitrid (im folgenden auch als Trennmittelteilchen bezeichnet). Natürlich können auch Mischungen von verschiedenen Trennmittelteilchen verwendet werden. Trennmittel sind Stoffe, die die Adhäsionskräfte zwischen angrenzenden Oberflächen verringern können. Feste Trennmittel werden häufig in Form von Teilchen bzw. Pulvern verwendet. Dem Fachmann sind die dafür eingesetzten Materialien geläufig. Die Trennmittel werden manchmal auch als Schmierstoffe bezeichnet. Allgemeine Übersichten finden sich in Römpp, Chemielexikon, 9. Auflage, Georg Thieme Verlag, 1992, S. 4690 - 4691, und Ullmanns Encyklopädie der technischen Chemie, 4. Auflage, Verlag Chemie 1981, Bd. 20, Seiten 457-672.

Bei den Trennmittelteilchen handelt es sich bevorzugt um anorganische Teilchen, es eignen sich aber auch organische Trennmittel, wie metallfreie Phthalocyanine oder Indanthrenfarbstoffe. Vorteilhafterweise werden Materialien mit Schichtgitterstruktur verwendet, es sind aber auch andere Trennmittel, wie Borax oder Bleioxid-Zinkoxid geeignet.

Beispiele für geeignete Trennmittel mit Schichtgitterstruktur sind z.B. Graphit, Graphitverbindungen, wie fluorierter Graphit, Glimmer, Talkum, Sulfide, Selenide, Telluride, Cadmiumchlorid, Bleiiodid, Cobaltchlorid und Silbersulfat. Besonders bevorzugt sind Graphit, Graphitverbindungen und Metall- oder Schwermetallsulfide, -selenide und -telluride, wie z.B. MoS₂, WS₂, WSe₂, NbS₂, NbSe₂, TaS₂, TaSe₂, AsSbS₄ oder AsAsS₄.

Die Trennmittelteilchen weisen gewöhnlich einen mittleren Teilchendurchmesser kleiner 100 µm, bevorzugt kleiner 30 µm und besonders bevorzugt kleiner 10 µm auf. Der mittlere Teilchendurchmesser bezieht sich hier wie auch in den späteren Angaben auf das ermittelte Volumenmittel, wobei im Komgrößenbereich von 1 bis 2.000 µm Laserbeugungsverfahren (Auswertung nach Mie) und im Bereich von 3,5 nm bis 3 µm ein UPA (Ultrafine Particle Analyzer, Leeds Northrup (laseroptisch)) zur Bestimmung der Verteilungen verwendet werden. Im Schnittbereich von 1 bis 3 µm wird hier auf die Messung mit UPA Bezug genommen.

Der Anteil der Trennmittelteilchen, bezogen auf das Gesamtgewicht der Beschichtung nach Härtung (fertiges Produkt), beträgt gewöhnlich 5 bis 95 Gew.%, vorzugsweise 20 bis 80 Gew.-% und besonders bevorzugt 30 bis 70 Gew.%. Die Trennmittelteilchen werden in Form einer Dispersion in einem Lösungsmittel eingesetzt oder werden dem Bindemittel als Pulver zugegeben.

Die Beschichtungszusammensetzung enthält als Bindemittelkomponente oberflächenmodifizierte nanoskalige Feststoffteilchen. Es hat sich erwiesen, dass die Trennmittelteilchen mit diesem Bindemittel dauerhaft und temperaturstabil auf Oberflächen gebunden werden können. In einer vorteilhaften Ausführungsform wird ein oberflächenmodifizierte Nanopartikel enthaltendes Nanokomposit, insbesondere in Form eines Sols, als Bindemittel verwendet. Ein Nanokomposit bzw. ein Nanokompositsol besteht aus einer Mischung von nanoskaligen Feststoffteilchen und vorzugsweise nach dem Sol-Gel-Verfahren hergestellten anorganischen oder organisch modifizierten anorganischen Polykondensaten oder Vorstufen davon. Das organisch modifizierte anorganische Polykondensat oder dessen Vorstufe kann ein organisch modifiziertes anorganisches Polysiloxan oder dessen Vorstufe sein. In der Beschichtungszusammensetzung liegt das Bindemittel aus Nanopartikeln oder Nanokomposit gewöhnlich als Sol oder Dispersion vor. In der gehärteten Schicht stellt es einen Matrixbildner dar.

Nanokomposite können durch einfaches Mischen eines Polykondensats oder einer Vorstufe, die bevorzugt aus den hydrolysierbaren Ausgangsverbindungen nach dem Sol-Gel-Verfahren erhalten werden, mit oberflächenmodifizierten nanoskaligen Feststoffteilchen erhalten werden. Die Bildung der Polykondensate oder der Vorstufen aus den hydrolysierbaren Ausgangsverbindungen nach dem Sol-Gel-Verfahren wird aber vorzugsweise in Anwesenheit von Nanopartikeln durchgeführt, weil die Nanopartikel dann durch die hydrolysierbaren Ausgangsverbindungen auch oberflächenmodifiziert werden. Bei diesem Verfahren werden gewöhnlich nicht oberflächenmodifizierte Nanopartikel eingesetzt, da während der Bildung des Polykondensats oder einer Vorstufe eine Oberflächen modifizierung erfolgt, es können aber auch bereits oberflächenmodifizierte Nanopartikel verwendet werden.

Das Bindemittel umfasst oberflächenmodifizierte Nanopartikel. Die Nanopartikel sind vorzugsweise anorganisch. Die Nanopartikel können aus Metall, einschließlich Metalllegierungen, Metallverbindungen oder Halbleiterverbindungen sein, aber auch Kohlenstoffmodifikationen wie Ruß oder Aktivkohle sind denkbar. Besonders bevorzugt handelt es sich bei den Nanopartikeln um Oxide oder Ruß. Es kann eine Art von nanoskaligen Feststoffteilchen oder eine Mischung verschiedener nanoskaliger Feststoffteilchen eingesetzt werden.

Die Nanopartikel können aus beliebigen Metallverbindungen sein, wobei Metall hier Silicium und Bor einschließt. Beispiele sind (gegebenenfalls hydratisierte) Oxide wie ZnO, CdO, SiO₂, GeO₂, TiO₂, ZrO₂, CeO₂, SnO₂, Al₂O₃ (insbesondere Böhmit, AIO(OH), auch als Aluminiumhydroxid), B₂O₃, In₂O₃, La₂O₃, Y₂O₃, Eisenoxide (z.B. Fe₂O₃, Fe₃O₄), Cu₂O, Ta₂O₅, Nb₂O₅, V₂O₅, MoO₃ oder WO₃; weitere Chalkogenide, wie z.B. Sulfide (z.B. CdS, ZnS, PbS und Ag₂S), Selenide (z.B. GaSe, CdSe und ZnSe) und Telluride (z.B. ZnTe oder CdTe); Halogenide, wie AgCl, AgBr, Agl, CuCl, CuBr, Cdl₂ und Pbl₂; Carbide wie CdC₂ oder SiC; Arseniden wie AlAs, GaAs und GeAs; Antimonide wie lnsb; Nitride wie AIN, Si₃N₄ und Ti₃N₄; Phosphide wie GaP, InP, Zn₃P₂ und Cd₃P₂; Phosphate, Silikate, Zirkonate, Aluminate, Stannate und die entsprechenden Mischoxide (z.B. Metall-Zinn-Oxide, wie Indium-Zinn-Oxid (ITO), Antimon-Zinn-Oxid (ATO), fluor-dotiertes Zinnoxid (FTO), Zn-dotiertes Al₂O₃, Leuchtpigmente mit Y- oder Eu-haltigen Verbindungen, Spinelle, Ferrite oder Mischoxide mit Perowskitstruktur wie BaTiO₃ und PbFiO₃).

Bei den nanoskaligen anorganischen Feststoffteilchen handelt es sich bevorzugt um ein Oxid oder Oxidhydrat von Si, Ge, Al, B, Zn, Cd, Ti, Zr, Y, Ce, Sn, In, La, Fe, Cu, Ta, Nb, V, Mo oder W, besonders bevorzugt von Si, Al, Y, Ti und Zr. Besonders bevorzugt werden Oxide bzw. Oxidhydrate eingesetzt. Bevorzugte nanoskalige anorganische Feststoffteilchen sind SiO₂, TiO₂, ZrO₂, Al₂O_{3'} AlO(OH,)Ta₂O₅, Y₂O_{3,} CeO₂, ZnO, SnO₂, Eisenoxide, wobei SiO₂, TiO₂, ZrO₂, Al₂O₃ und AIOOH bevorzugt sind, besonders bevorzugt ist SiO₂.

Der Gehalt an Nanopartikeln beträgt gewöhnlich weniger als 90 Gew.-%, bevorzugt weniger als 70 Gew.-% und besonders bevorzugt weniger als 60 Gew.-%, bezogen auf das Gesamtgewicht der Beschichtung nach der thermischen Härtung (fertiges Produkt), und kann in speziellen Fällen sogar weniger als 10 Gew.-% betragen. Da der Anteil an Trennmittel stark variieren kann, variiert auch der Gehalt an Nanopartikeln. In der Beschichtungszusammensetzung kann der Gehalt an Nanopartikeln, bezogen auf den Feststoffgehalt ausgenommen Trennmittelteilchen, z.B. mindestens 5 Gew.-% betragen.

Die Herstellung dieser nanoskaligen Teilchen kann auf übliche Weise erfolgen, z.B. durch Flammpyrolyse, Plasmaverfahren, Kolloidtechniken, Sol-Gel-Prozesse, kontrollierte Keim- und Wachstumsprozesse; MOCVD-Verfahren und Emulsionsverfahren. Diese Verfahren sind in der Literatur ausführlich beschrieben. Das Sol-Gel-Verfahren wird nachstehend eingehender beschrieben.

Teilchen auf Basis ZrO₂ oder Al₂O₃ können z.B. aus Zirconiumoxidvorstufen, wie Zirconiumalkoxiden, Zirconiumsalzen oder komplexierten Zirconiumverbindungen bzw. Aluminiumsalzen und Aluminiumalkoxiden hergestellt werden. Es können auch im Handel erhältliche kolloidale ZrO₂-Partikel (unstabilisiert oder stabilisiert) oder nanoskalige Al₂O₃- oder AlO(OH)Partikel in Form von Solen oder Pulvern verwende werden.

Entsprechend können SiO₂-Teilchen aus hydrolysierbaren Silanen (z.B. der nach-stehenden Formel (I)) hergestellt werden. Beispiele für im Handel erhältliche Dispersionen sind die wässrigen Kieselsole der Bayer AG (Levasile^{®}) sowie kolloidale Sole von Nissan Chemicals (IPA-ST, MA-ST, MEK-ST, MIBK-ST). Als Pulver sind z.B. pyrogene Kieselsäuren von Degussa (Aerosil^{®}-Produkte) erhältlich.

Die nanoskalige Feststoffteilchen besitzen in der Regel einen mittleren Teilchendurchmesser unter 500 nm, gewöhnlich nicht mehr als 300 nm, bevorzugt nicht mehr als 100 nm und insbesondere nicht mehr als 50 nm. Dieses Material kann in Form eines Pulvers eingesetzt werden, es wird jedoch vorzugsweise in Form eines Sols oder einer Suspension verwendet.

Bei der Oberflächenmodifizierung von nanoskaligen Feststoffteilchen handelt es sich um ein bekanntes Verfahren, wie es von der Anmelderin z.B. in WO 93/21127 (DE 4212633) oder WO 96/31572 beschrieben wurde. Die Herstellung der oberflächenmodifizierten nanoskaligen anorganischen Feststoffteilchen kann prinzipiell auf zwei verschiedenen Wegen durchgeführt werden, nämlich zum einen durch Oberflächenmodifizierung von bereits hergestellten nanoskaligen anorganischen Feststoffteilchen und zum anderen durch Herstellung dieser anorganischen nanoskaligen Feststoffteilchen unter Verwendung von einer oder mehreren Verbindungen, die über entsprechende funktionelle Gruppierungen verfügen. Diese beiden Wege werden in obengenannten Patentanmeldungen näher erläutert.

Als Oberflächenmodifizierungsmittel, insbesondere zur Oberflächenmodifizierung bereits vorliegender nanoskaliger Teilchen, eignen sich neben anorganischen oder organischen Säuren auch vorzugsweise niedermolekulare organische Verbindungen oder niedermolekulare hydrolysierbare Silane mit mindestens einer nicht hydrolysierbaren Gruppe, die mit an der Oberfläche der Feststoffteilchen vorhandenen Gruppen reagieren und/oder (zumindest) wechselwirken können. Beispielsweise befinden sich auf Nanopartikeln als Oberflächengruppen reaktionsfähige Gruppen als Restvalenzen, wie Hydroxygruppen und Oxygruppen, z.B. bei Metalloxiden, oder Thiolgruppen und Thiogruppen, z.B. bei Metallsulfiden, oder Amino-, Amid- und Imidgruppen, z.B. bei Nitriden.

Eine Oberflächenmodifizierung der nanoskaligen Teilchen kann z.B. durch Mischen der nanoskaligen Teilchen mit nachstehend erläuterten geeigneten Oberflächenmodifizierungsmitteln gegebenenfalls in einem Lösungsmittel und unter Anwesenheit eines Katalysators erfolgen. Bei Silanen als Oberflächenmodifizierungsmittel genügt z.B. ein mehrstündiges Rühren mit den nanoskaligen Teilchen bei Raumtemperatur zur Modifizierung. Bei ZrO₂ wird bevorzugt ein Y-stablisiertes ZrO₂ (Y-ZrO₂) verwendet. Natürlich hängen zweckmäßige Bedingungen, wie z.B. Temperatur, Mengenverhältnisse und Dauer der Umsetzung, von den jeweiligen speziellen Reaktionspartnern und dem gewünschten Belegungsgrad ab.

Die Oberflächenmodifizierungsmittel können z.B. sowohl kovalente als auch ionische (salzartige) oder koordinative Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von kovalenten, ionischen und/oder koordinativen Bindungen. Unter einer koordinativen Bindung wird eine Komplexbildung verstanden. Zwischen dem Oberflächenmodifizierungsmittel und dem Partikel kann z.B. eine Säure/Base-Reaktion nach Brönsted oder Lewis, eine Komplexbildung oder eine Veresterung stattfinden.

Erfindungsgemäß bevorzugt ist es auch, dass die Oberflächenmodifizierungsmittel ein relativ niedriges Molekulargewicht aufweisen. Beispielsweise kann das Molekulargewicht weniger als 1.500, insbesondere unter 1.000 und vorzugsweise unter 500 oder unter 400 oder sogar unter 300 betragen. Dies schließt selbstverständlich ein deutlich höheres Molekulargewicht der Verbindungen nicht aus (z.B. bis zu 2.000 und mehr).

Beispiele für geeignete funktionelle Gruppen der Oberflächenmodifizierungsmittel zur Anbindung an die Nanopartikel sind Carbonsäuregruppen, Anhydridgruppen, Säureamidgruppen, (primäre, sekundäre, tertiäre und quartäre) Aminogruppen, SiOH-Gruppen, hydrolisierbare Reste von Silanen (nachstehend in Formel (1) beschriebene Gruppe SiX) und C-H-acide Gruppierungen, z.B. ß-Dicarbonylverbindungen. Es können auch mehrere dieser Gruppen gleichzeitig in einem Molekül vorhanden sein (z.B. Betaine, Aminosäuren, EDTA).

Beispiele für Verbindungen, die zur Oberflächenmodifizierung verwendet werden, sind gegebenenfalls substituierte (z.B. mit Hydroxy), gesättigte oder ungesättigte Mono-und Polycarbonsäuren (vorzugsweise Monocarbonsäuren) mit 1 bis 24 Kohlenstoffatomen (z.B. Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure und Fumarsäure) und Monocarbonsäuren mit 1 bis 24 Kohlenstoffatomen mit Etherbindungen (z.B. Methoxyessigsäure, Dioxaheptansäure und 3,6,9-Trioxadecansäure) sowie deren Anhydride, Ester (vorzugsweise C₁-C₄-Alkylester) und Amide, z.B. Methylmethacrylat.

Beispiele für weitere geeignete Oberflächenmodifikatoren sind quaternäre Ammoniumsalze der Formel NR¹R²R³R⁴⁺X⁻, worin R¹ bis R⁴ gegebenenfalls voneinander verschiedene aliphatische, aromatische oder cycloaliphatische Gruppen mit vorzugsweise 1 bis 12, insbesondere 1 bis 8 Kohlenstoffatomen darstellen, wie z.B. Alkylgruppen mit 1 bis 12, insbesondere 1 bis 8 und besonders bevorzugt 1 bis 6 Kohlenstoffatomen (z.B. Methyl, Ethyl, n- und i-Propyl, Butyl oder Hexyl), und X⁻ für ein anorganisches oder organisches Anion steht, z.B. Acetat, OH⁻, Cl⁻, Br⁻ oder I⁻; Mono- und Polyamine, insbesondere solche der allgemeinen Formel R₃₋ₙNHₙ, worin n = 0, 1 oder 2 und die Reste R unabhängig voneinander Alkylgruppen mit 1 bis 12, insbesondere 1 bis 8 und besonders bevorzugt 1 bis 6 Kohlenstoffatomen darstellen (z.B. Methyl, Ethyl, n- und i-Propyl, Butyl oder Hexyl) und Ethylenpolyamine (z.B. Ethylendiamin, Diethylentriamin); Aminosäuren; Imine, ß-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁-C₄-alkylester, wie Acetessigsäureethylester; und Silane, wie z.B. die hydrolysierbaren Silane mit mindestens einer nicht hydrolysierbaren Gruppen der nachstehenden allgemeinen Formel (1), wobei eine oder mehrere der Gruppen R auch mit einer funktionellen Gruppe substituiert sein können, z.B. mit einer (Meth)acryl-, Epoxy- (einschließlich Glycidyl- oder Glycidyloxy-), Thiol-, Carboxy-, Carbonsäureanhydrid- oder Aminogruppe.

Bevorzugte eingesetzte rein organische Oberflächenmodifizierungsmittel sind Monocarbonsäuren mit 1 bis 24 Kohlenstoffatomen, wie z.B. Ameisensäure, Essigsäure, Propionsäure, Buttersäure, Hexansäure, Methacrylsäure, Citronensäure, Stearinsäure, Methoxyessigsäure, Dioxaheptansäure und 3,6,9-Trioxadecansäure sowie die entsprechenden Säureanhydride und Säureamide und ß-Dicarbonylverbindungen mit 4 bis 12, insbesondere mit 5 bis 8 Kohlenstoffatomen, z.B. Diketone wie Acetylaceton, 2,4-Hexandion, Acetessigsäure und Acetessigsäure-C₁₋₄-alkylester, wie Acetessigsäureethylester.

Für die in situ Herstellung von nanoskaligen anorganischen Feststoffteilchen mit polymerisierbaren/polykondensierbaren Oberflächengruppen sei auf WO 98/51747 (DE 19746885) verwiesen.

Wie vorstehend erwähnt, umfasst das Bindemittel in einer vorteilhaften Ausführungsform ein Nanokomposit, das die Nanopartikel in einem Polykondensat oder einer Vorstufe davon enthält, wobei das Kondensat vorzugsweise in Anwesenheit der Nanopartikel hergestellt wird, so dass die hydrolysierbaren Ausgangsverbindungen für das Kondensat auch die Nanopartikel oberflächenmodifizieren.

Die Herstellung der anorganischen oder organisch modifizierten anorganischen Polykondensate oder deren Vorstufen erfolgt vorzugsweise nach dem Sol-Gel-Verfahren durch Hydrolyse und Kondensation der hydrolysierbare Ausgangsverbindungen (insbesondere hydrolysierbare Silane der nachstehenden Formel (I)). Unter Vorstufen werden dabei insbesondere Vorhydrolysate und/oder Vorkondensate der hydrolysierbaren Ausgangsverbindungen mit geringerem Kondensationsgrad verstanden. Beim Sol-Gel-Verfahren werden die hydrolysierbaren Verbindungen mit Wasser, gegebenenfalls durch Erwärmen oder saure oder basische Katalyse, hydrolysiert und teilweise kondensiert. Es können stöchiometrische Wassermengen, aber auch geringere oder größere Mengen verwendet werden. Das sich bildende Sol kann durch geeignete Parameter, z.B. Kondensationsgrad, Lösungsmittel oder pH-Wert, auf die für die Zusammensetzung gewünschte Viskosität eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Wie gesagt, erfolgt die Herstellung der Polykondensate oder deren Vorstufen bevorzugt unter Anwesenheit der Nanopartikel. Das nanoskalige Feststoffteilchen enthaltende Nanokomposit ist demnach vorzugsweise erhältlich nach dem Sol-Gel-Verfahren durch Umsetzen von nanoskaligen Feststoffteilchen mit einem oder mehreren Silanen der allgemeinen Formel:

RₓSiA₍₄₋ₓ₎ (I)

worin die Reste A gleich oder verschieden sind und Hydroxylgruppen oder hydrolysierbare Gruppen darstellen, die Reste R gleich oder verschieden sind und nicht hydrolysierbare Gruppen darstellen und x den Wert 0, 1, 2, 3 hat, wobei bevorzugt bei mindesten 50% der Stoffmenge der Silane x ≥ 1 ist. Die nanoskaligen Feststoffteilchen werden insbesondere durch die Umsetzung mit den Silanen oberflächenmodifiziert. Sofern nur Silane der Formel (1) mit x = 0 verwendet werden, gelangt man zu rein anorganischen Nanokompositen, sonst werden die bevorzugten organisch-anorganischen Nanokomposite erhalten.

In der allgemeinen Formel (I) sind die hydrolysierbaren Gruppen A, die gleich oder voneinander verschieden sein können, beispielsweise Wasserstoff, Hydroxy oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Alkaryloxy (z.B. Benzyloxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen und Acyloxygruppen. Besonders bevorzugte hydrolysierbare Reste sind C₂₋₄-Alkoxygruppen, insbesondere Ethoxy. Die genannten hydrolysierbaren Gruppen A können gegebenenfalls einen oder mehrere übliche Substituenten tragen, z.B. Halogenatome oder Alkoxygruppen.

Die nicht hydrolysierbaren Reste R der Formel (I) sind z.B. Alkyl (z.B. C₁₋₂₀-Alkyl, insbesondere C₁₋₄Alkyl, wie Methyl, Ethyl, n-Propyl, i-Propyl, n-Butyl, i-Butyl, sek.-Butyl und tert.-Butyl), Alkenyl (z.B. C₂₋₂₀-Alkenyl, insbesondere C₂₋₄-Alkenyl, wie Vinyl, 1-Propenyl, 2-Propenyl und Butenyl), Alkinyl (z.B. C₂₋₂₀-Alkinyl, insbesondere C₂₋₄-Alkinyl, wie Acetylenyl oder Propargyl), Aryl (insbesondere C₆₋₁₀-Aryl, wie Phenyl und Naphthyl) und entsprechende Aralkyl- und Alkarylgruppen, wie Tolyl und Benzyl, und cyclische C₃-C₁₂-Alkyl- und -Alkenylgruppen, wie Cyclopropyl, Cyclopentyl und Cyclohexyl. Die Reste R können gegebenenfalls einen oder mehrere übliche Substituenten, wie z.B. Halogen-, Alkoxy-, Hydroxy-, Amino-, (Meth)acryl- und Epoxidgruppen, aufweisen.

Besonders bevorzugte Reste R sind gegebenenfalls substituierte C₁₋₄-Alkylgruppen, insbesondere Methyl und Ethyl, und gegebenenfalls substituierte C₆₋₁₀-Arylgruppen, insbesondere Phenyl.

Weiter ist bevorzugt, dass in der obigen Formel (I) x den Wert 0, 1, 2 und besonders bevorzugt den Wert 0 oder 1 aufweist. Ferner weisen vorzugsweise mindestens 60% und insbesondere mindestens 70 Stoffmengen-% den Wert x = 1 auf, wobei der Rest bevorzugt aus Silanen der Formel (I) mit x = 0 besteht.

Bevorzugt eingesetzte Silane sind Alkyl- und Aryltrialkoxysilane und/oder Tetraalkoxysilane, wie Methyltriethoxysilan (MTEOS), Ethyltriethoxysilan, Phenyltriethoxysilan (PTEOS), Tetraethoxysilan (TEOS) oder Tetramethoxysilan. Das erfindungsgemäße Polykondensat kann z.B. aus reinem Methyltriethoxysilan (MTEOS) oder aus Mischungen von MTEOS und Tetraethoxysilan (TEOS) oder MTEOS und Phenyltriethoxysilan (PTEOS) und TEOS hergestellt werden.

Die erfindungsgemäß verwendeten Silane der allgemeinen Formel (I) können ganz oder teilweise in Form von Vorkondensaten eingesetzt werden, d.h. Verbindungen, die durch teilweise Hydrolyse der Silane der Formel (I) allein oder im Gemisch mit anderen hydrolysierbaren Verbindungen entstanden sind. Derartige, im Reaktionsgemisch vorzugsweise löslichen Oligomere können geradkettige oder cyclische niedermolekulare Teilkondensate mit einem Kondensationsgrad von z.B. 2 bis 100 insbesondere 2 - 6 sein.

In einer Ausführungsform können die hydrolysierbaren Silane mit einer unterstöchiometrischen Wassermenge, bezogen auf die hydrolysierbaren Gruppen, unter Bildung eines Nanokompositsoles hydrolysiert und kondensiert werden. Die zur Hydrolyse und Kondensation eingesetzte Wassermenge beträgt vorzugsweise 0,1 bis 0,9 und besonders bevorzugt 0,25 bis 0,8 Mol Wasser pro Mol der vorhandenen hydrolysierbaren Gruppen. Bei einer unterstöchiometrischen Wasserzugabe können die Bindemittel über einen gewissen Zeitraum in stabiler Weise gelagert werden und gegebenenfalls vor der Zugabe der Trennmittel oder vor Auftragen auf das Substrat durch eine zusätzliche Zugabe von Wasser aktiviert werden.

Die Hydrolyse und Kondensation der Silane wird unter Sol-Gel-Bedingungen z.B. in Gegenwart saurer Kondensationskatalysatoren (z.B. Salzsäure) bei einem pH-Wert bevorzugt zwischen 1 und 7 besonders bevorzugt zwischen 1 und 3 durchgeführt.

Vorzugsweise wird neben dem Lösungsmittel, das bei der Hydrolyse entsteht, kein weiteres Lösungsmittel angewandt, es können jedoch falls gewünscht, Wasser, alkoholische Lösungsmittel (z.B. Ethanol) oder andere polare, protische und aprotische Lösungsmittel (Tetrahydrofuran, Dioxan) eingesetzt werden. Wenn andere Lösungsmittel eingesetzt werden müssen, sind Ethanol und 1-Propanol, 2-Propanol, Ethylenglycol und dessen Derivate (z.B. Diethylenglycolmonoethylether, Diethylenglycolmonobutylether) bevorzugt.

Sofern das Bindemittel Polykondensat oder eine Vorstufe davon enthält, beträgt der Anteil an Polykondensat im Bindemittel, bezogen auf das Gesamtgewicht der Beschichtung nach der Härtung (fertiges Produkt), gewöhnlich unter 95 Gew.-%, bevorzugt unter 80 Gew.-% und besonders bevorzugt unter 70 Gew.-%.

Wie bereits oben erläutert, wird das Polykondensat bevorzugt in Anwesenheit der Nanopartikel hergestellt, so dass die Nanopartikel in oberflächenmodifizierter Form im Polykondensat eingebettet sind. Bei der Hydrolyse und Kondensation der Silane reagiert dabei ein Teil der Silane mit reaktiven Gruppen auf der Oberfläche der Nanopartikel und führt so zur Oberflächenmodifizierung der Nanopartikel, was auch zu einer festeren Bindung der Nanopartikel in der Polykondensatmatrix führt.

In der Beschichtungszusammensetzung können weitere Additive enthalten sein, die in der Technik üblicherweise je nach Zweck und gewünschten Eigenschaften zugegeben werden. Konkrete Beispiele sind Füllstoffe, Thixotropiermittel, vorstehend genannte Lösungsmittel, andere matrixbildende Komponenten, organische Dispergier- und Bindemittel wie Polyvinylbutyrale, Polyethylenglycole, Polyethylenimine, Polyvinylalkohole, Polyvinylpyrrolidone, Cellulosen oder Cellulosederivate, Polyole, organische und anorganische Farbpigmente, auch im nanoskaligen Bereich, Metallkolloide, z.B. als Träger optischer Funktionen, Farbstoffe, UV-Absorber, glasbildende Komponenten (z.B. Borsäure, Borsäurester, Natriumethylat, Kaliumacetat, Aluminium-sek.-butylat), Korrosionsschutzmittel (z.B. Tanninsäure) Gleitmittel, Verlaufmittel, Netzmittel, Haftvermittler und Katalysatoren, z.B. Härtungskatalysatoren wie Metallsalze, und Metallalkoxide.

Als Füllstoffe eignen sich z.B. anorganischen Füllstoffteilchen, bei denen es sich um dieselben Materialien handeln kann, die auch oben für die Nanopartikel genannt wurden. Beispiele sind SiO₂, Al₂O₃, ZrO₂, TiO₂, Mullit, Böhmit, Si₃N₄, SiC und AlN. Der mittlere Teilchendurchmesser ist gewöhnlich kleiner als 100 µm, insbesondere kleiner als 10 µm, bevorzugt kleiner als 5 µm und besonders bevorzugt kleiner als 1 µm.

Die optionale Zugabe von Füllstoffen kann zu einem beliebigen Zeitpunkt erfolgen. So können diese Füllstoffe bei der Herstellung einer Trennmittelteilchen-Suspension eingearbeitet werden, sie können aber auch zu dem Bindemittel in Form von Pulvern oder Suspensionen zugegeben werden.

Zur Dispergierung der Feststoffteilchen in dem Bindemittel können übliche Rühraggregate (Dissolver, Leitstrahlmischer), Ultraschallbeaufschlagung, Kneter, Schnekkenextruder, Walzenstühle, Schwingmühlen, Planetenmühlen, Mörsermühlen, und insbesondere Attritormühlen eingesetzt werden. Bevorzugt zur Dispergierung der nanoskaligen Pulvern sind Attritormühlen mit kleinen Mahlkörpem, gewöhnlich mit einem Durchmesser kleiner 2 mm, bevorzugt kleiner 1 mm und besonders bevorzugt kleiner 0,5 mm.

Zur Herstellung der Trennmittelteilchen-Suspensionen sind zur Dispergierung hochtourige Dispergieraggregate mit Rotor/Statorsystemen, wie Ultra Turrax^{®} oder Kreiselhomogenisatoren bevorzugt. Besonders bevorzugt sind dabei Aggregate mit mehrstufigen Rotor/Statorsystemen (Cavitron^{®} Hochleistungskreiselhomogenisator).

Die Zugabe der Trennmittelteilchen kann durch Vermischen von separaten Trennmittel-Suspensionen und Bindemittelsolen erfolgen, sie kann aber auch durch Einarbeitung/Dispergierung der Trennmittelteilchen in das Bindemittelsol erfolgen. Bevorzugt erfolgt die Herstellung durch Vermischen von separater Trennmittel-Suspension mit separatem Bindemittelsol unter rühren.

In manchen Fällen ist es vorteilhaft, vor dem Auftrag des Beschichtungsmittels auf das Substrat den pH-Wert des Bindemittels und/oder der Schlichte (Bindemittel + Trennmittel) einzustellen. Gewöhnlich wird dazu eine Base, bevorzugt eine Base in einem alkoholischen Lösemittel und besonders bevorzugt eine ethanolische Natriumethylatlösung verwendet. Der pH-Wert wird gewöhnlich zwischen 1 und 7 bevorzugt zwischen 2,5 und 5 und besonders bevorzugt zwischen 3 und 4 eingestellt. Während des Reaktionsverlaufs gebildete Salze können durch Sedimentation und/oder Zentrifugation abgetrennt werden. Nach der Fertigstellung der Schlichte ist es in manchen Fällen vorteilhaft, die Schlichte vor dem Auftrag weiter zu homogenisieren. Gewöhnlich erfolgt dies durch Rühren der Schlichte gewöhnlich über Nacht.

In manchen Fällen ist es weiterhin vorteilhaft, durch Zugaben genauer Wassermengen eine definierte Hydrolyse/Kondensationsreaktion in der fertigen Schlichte (Bindemittelsol + Trennmittel) zu ermöglichen, gewöhnlich wird dabei ein Gesamtwassergehalt von weniger als 1 Mol Wasser pro Mol (der insgesamt eingesetzten) hydrolysierbarer Gruppe eingestellt.

Als Substrate für die Beschichtungen oder Formtrennschichten eignen sich alle herkömmlichen Substrate. Beispiele für ein geeignetes Substrat sind Substrate oder Formoberflächen aus Metall, Halbleiter, Glas, Keramik, Glaskeramik, Kunststoff oder anorganisch-organischen Kompositmaterialien. Für Hochtemperaturanwendungen werden zweckmäßigerweise temperaturstabile Substrate verwendet, z.B. Metalle, Halbleiter, Glas, Keramik, Glaskeramik oder wärmebeständige Kunststoffe. Bevorzugt handelt es sich um anorganische Substrate.

Besonders geeignete Substratmaterialien sind Metalle wie Eisen, Chrom, Kupfer, Nickel, Aluminium, Titan, Zinn und Zink und deren Legierungen (Gusseisen, Stahlguss, Stähle, z.B. unlegierte, niedriglegierte, hochlegierte Stähle, Bronzen, Messing) sowie anorganische Nichtmetalle wie Keramiken, Feuerfestmaterialien und Gläser, wobei alle Substrate in Form von Folien, Geweben, Blechen/Platten und Formstücken vorliegen können.

Beispiele für Halbleiter sind Silicium, z.B. in Form von Wafem, und Indium-Zinn-OxidSchichten (ITO-Schichten) auf Glas. Als Glas können alle herkömmlichen Glasarten verwendet werden, z.B. Kieselglas, Borosilicatglas oder Kalknatronsilicatglas. Beispiele für Kunststoffsubstrate sind Polycarbonat, Polymethylmethacrylat, Polyacrylate, Polyethylenterephthalat.

Die Substrate können vorbehandelt werden, z.B. zur Reinigung, durch eine Coronabehandlung oder mit einer Vorbeschichtung (z.B. einer Lackierung oder einer metallisierten Oberfläche).

Die trennmittelhaltigen Beschichtungssole lassen sich mittels gängiger Beschichtungsmethoden wie Rakeln, Tauchen, Fluten, Schleudern, Sprühen, Bürsten und Streichen auf die Substrate/Formoberflächen aufbringen. Zur Verbesserung der Haftung kann es sich in manchen Fällen als vorteilhaft erweisen, das Substrat vor dem Kontaktieren mit verdünnten oder unverdünnten Bindemittelsolen bzw. deren Vorstufen oder anderen Primern zu behandeln.

Das erfindungsgemäße Formtrennmittel bedeckt z.B. vorzugsweise alle Flächen von Gussformen, die mit dem teilerschmolzenen bzw. geschmolzenen Metall in Kontakt kommen.

Der Feststoffgehalt der Schlichten (Trennmittel plus Feststoffanteil des Bindemittelsols) kann in Abhängigkeit vom gewählten Beschichtungsverfahren durch Zugabe von Lösungsmittel und/oder Wasser eingestellt werden. Für eine Sprühbeschichtung wird gewöhnlich ein Feststoffgehalt zwischen 2 und 70 Gew.-%, bevorzugt zwischen 5 und 50 Gew.-% und besonders bevorzugt zwischen 10 und 30 Gew.-% eingestellt. Für andere Beschichtungsverfahren kann selbstverständlich eine anderer Feststoffgehalt eingestellt werden. Ebenso ist die Zugabe von Thixotropiermitteln bzw. Stellmitteln, wie zum Beispiel Cellulosederivaten möglich.

Eine isostatische Verdichtung frisch applizierter Trennschichten vor der abschließenden Härtung kann die Packungsdichte weiter erhöhen und damit die Festigkeit und die Lebensdauer der Schicht ebenfalls deutlich erhöhen. Dazu wird das Aufbringen einer weiteren nahezu binderfreien Trennmittel-Trennschicht empfohlen, die ein Verkleben der noch nicht gehärteten Schicht mit dem umgebenden Medium bei der isostatischen Verdichtung verhindert.

Der abschließenden Härtung können eine oder mehrere Trocknungsstufen bei Raumtemperatur oder leicht erhöhter Temperatur zum Beispiel in einem Umlufttrockenschrank und oder durch Beheizung/Temperierung z.B. der Form selbst vorangehen. Bei oxidationsempfindlichen Substraten kann die Trocknung und/oder nachfolgende Härtung in einer Schutzgasatmosphäre (N₂, Ar) oder Vakuum erfolgen. In der Regel wird durch Erwärmen gehärtet.

Die thermische Aushärtung erfolgt unter Berücksichtigung der Wärmeempfindlichkeit vorzugsweise durch Wärmebehandlung bei Temperaturen über 50 °C, vorzugsweise über 200 °C und besonders bevorzugt über 300°C. Die Schichten können auch bei höheren Temperaturen ausgeheizt werden, bevorzugt bei Temperaturen von 500 bis 700°C, wenn das Substrat bei diesen Temperaturen ausreichend stabil ist, z.B. gegen Oxidation oder Zunderbildung. Bei der Temperaturbehandlung kann es zum Ausbrennen organischer Bestandteile kommen.

Die Schichten selbst halten in inerter Atmosphäre aber auch Temperaturen von über 1.000°C stand, die inerte Atmosphäre ist wegen der sonst auftretenden Oxidation des Substrates bzw. des Trennmittels notwendig. Die Bindemittel selbst sind sogar in normaler Atmosphäre auch noch bei 1000 °C beständig.

Die Wärmebehandlung der Beschichtungen (z.B. als der Formtrennschichten) kann z.B. in Öfen, durch Heißgas, durch direkte Gasbeflammung der Oberflächen, durch direkte oder indirekte IR-Beheizung oder auch in situ durch Kontaktieren der Trennschichten mit dem flüssigen (geschmolzenen oder teilerschmolzenen) Gießmetall erfolgen.

Die hergestellten beschichteten Substrate eignen sich bei zweckmäßiger Wahl des Substrats wegen der Temperaturbeständigkeit der Schichten als antiadhäsive Hochtemperaturschichten. Spezielle Anwendungen sind z.B. Formtrennschichten, insbesondere für das Gießen von Metallen, und tribologische Schichten wegen der guten Gleiteigenschaften.

Die folgenden Beispiele dienen der weiteren Erläuterung der vorliegenden Erfindung.

### Beispiele

### 1. Synthese silikatischer Bindersole

### 1.1. MTKS; R_{OR} 0,4

65,5 g MTEOS und 19,1 g TEOS werden gemischt. Eine Hälfte der Mischung wird unter starkem Rühren mit 14,2 g Kieselsol (LEVASIL^{®} 300/30) und 0,4 ml konzentrierter Salzsäure zur Reaktion gebracht. Nach 5 Minuten wird die zweite Hälfte der Silanmischung zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### 1.2. MTKS-PT; R_{OR} 0,4

65,5 g MTEOS und 19,1 g TEOS werden gemischt und unter starkem Rühren mit 28,4 g Kieselsol (LEVASIL^{®} 300/30) und 0,8 ml konzentrierter Salzsäure zur Reaktion gebracht. Nach 5 Minuten wird eine weitere Silanmischung, bestehend aus 88,3 g Phenyltriethoxysilan (PTEOS) und 19,1 g TEOS, zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### 2. Herstellung von silikatisch gebundenen Schichten

### 2.1. Herstellung ethanolischer MoS₂-Suspensionen

333 g Molybdänsulfidpulver (Molyduval®, submikron MoS₂) werden in 649,2 g wasserfreiem, vergälltem Ethanol (MEK), in welchem 16,8 g Polyvinylbutyral (Hoechst: Mowital^{®} B 30 T) gelöst sind, eingerührt. Die Suspension wird in einen kühlbaren Rührbehälter gefüllt und mit einem hochtourigen Ultra-Turrax^{®} T 25 bei einer Drehzahl von 24.000 min⁻¹ für die Dauer von 30 min dispergiert.

### 2.2. Herstellung ethanolischer Graphit-Suspensionen

333 g Graphitpulver (Lonza, HSAG 100) werden in 600 g wasserfreiem, vergälltem Ethanol (MEK), in welchem 66 g Polyacrylsäure 50.000 (Polyscience; 25 % in H₂O) gelöst sind, eingerührt. Die Suspension wird in einen kühlbaren Rührbehälter gefüllt und mit einem hochtourigen Ultra-Turrax^{®} T 25 bei einer Drehzahl von 24.000 min⁻¹ für die Dauer von 30 min dispergiert.

### 2.3. Herstellung von MOS₂l MTKS-PT-Schichten; MoS₂ : SiO₂ = 2:1

30 g MTKS-PT R_{OR} 0,4 (entspricht ca. 10g SiO₂) wird mit 1,5 g VE-Wasser aktiviert und 1 h gerührt. Danach wird der Binder mit 60 g der obigen ethanolischen Trennmittel-Suspension mit einem Feststoffgehalt von ca. 33 Gew.-% (entspricht ca. 20 g MoS₂) unter Rühren zugemischt. Der Feststoffgehalt des Beschichtungssystems (bezogen auf das Gesamtmasse Beschichtung nach der thermischen Härtung) beträgt ca. 33 Gew.-%.

Dieses Beschichtungssystem kann mittels gängiger Beschichtungsverfahren appliziert werden, die Einstellung des Feststoffgehaltes erfolgt in Abhängigkeit vom anzuwendenden ApplikationsVerfahren.

### 2.4. Herstellung von Graphit / MTKS-PT-Schichten; Graphit: SiO₂ = 1:1

Zu 50 g MTKS-PT R_{OR} 0,4 werden 50 g der obigen ethanolischen Graphit-Suspension mit einem Feststoffgehalt von 30 Gew.-% unter Rühren zugemischt. Der Feststoffgehalt der Schlichte (bezogen auf Trennmittel) beträgt 15 Gew.-%; nach einer Rührdauer von 1 Tag kann die Suspension verarbeitet werden. (Anm.: das zur Hydrolyse benötigte Wasser ist bereits in der Graphit-Suspension enthalten.)

Dieses Beschichtungssystem kann mittels gängiger Beschichtungsverfahren appliziert werden, die Einstellung des Feststoffgehaltes erfolgt in Abhängigkeit vom anzuwendenden Applikationsverfahren.

### 3. Herstellung einer Al₂O₃/ZrO₂-Bindephase

### 3.1. nAnZ-Binder (1:1)

100 g Böhmit (Disperal^{®}, Fa. Sasol Hamburg) werden in 900 g Wasser eingerührt, wobei durch Zugabe von Essigsäure ein konstanter pH-Wert von 3 eingestellt wird. Die Suspension wurde 24 h gerührt und die groben Agglomerate anschließend durch Sedimentation (48 h) abgetrennt.

11,6 g eines nanodispersen, Y-stabilisierten, oberflächenmodifizierten ZrO₂ Pulvers (spezifische Oberfläche von 200 g/cm³, 16 Gew.-% Trioxadecansäure) werden in 128,37 g des obigen Böhmitsols (entsprechen 10 g Al₂O₃) eingerührt und durch Ultraschallbehandlung (Branson Sonifier Typ) für die Dauer von 30 Minuten dispergiert.

Zur Herstellung der Bindephase werden zunächst 35 g der obigen Korund-Suspension (entsprechen: 7 g Al₂O₃) tropfenweise zu 70 g des nAnZ-Binder-Sols gegeben.

### 4. Herstellung von Al₂O₃/ZrO₂-gebundenen Schichten

### 4.1. Herstellung wässrigen MoS₂-Suspension

250 g MoS₂-Pulver (Molyduval®, van Laar GmbH, submikronfeines Pulver MoS₂) werden in 743,75 g deionisiertem Wasser, in welchem 6,25 g Polyvinylalkohol (Hoechst: PVA 4/88) gelöst sind, eingerührt. Die Suspension wird in einen kühlbaren Rührbehälter gefüllt und mit einem hochtourigen Ultra Turrax^{®} T 25 für die Dauer von 30 min dispergiert.

### 4.2. Herstellung wässriger Graphit-Suspensionen

250 kg Graphit-Pulver (Timcal^{®}, TIMREX KS 4) werden in 743,75 g deionisiertem Wasser, in welchem 6,25 g eines Tensids (ICI: Tween^{®} 80) gelöst ist, eingerührt. Die Suspension wird in einen kühlbaren Rührbehälter gefüllt und mit einem hochtourigen Ultra Turrax® T 25 für die Dauer von 30 min dispergiert.

### 4.3. Herstellung einer MoS₂-AnAnZ-Schicht

80 g Al₂O₃ (TM-DAR, Fa. TAl MEI) werden in 318 g H₂O und 2 g Essigsäure in einer Attritormühle (PE 075 Fa. Netzsch) mit 330 g Mahlkugeln (Al₂O₃; 4 - 5 mm Durchmesser) in einem PE-Mahlbecher (+ Rotor) für die Dauer von 2 h bei 700 U/min dispergiert.

70 g nAnZ-Sol (entsprechen 10 g Feststoff) werden mit 35 g der obigen Al₂O₃-Suspension (entsprechen 7 g Al₂O₃) und anschließend mit 12 g der wässrigen MoS₂-Suspension (entsprechen 3 g Feststoff) unter Rühren vermischt.

Zur besseren Verabeitung kann durch Zugabe von wässrigem Ammoniak ein pH-Wert im Bereich von c. 5 - 6 eingestellt werden, anschließend kann die Schlichte zur Beschichtung mittels gängiger Verfahren appliziert werden

### 4.4. Herstellung einer Graphit -AnAnZ-Schicht

80 g Al₂O₃ (TM-DAR, Fa. TAI MEI) werden in 318 g H₂O und 2 g Essigsäure in einer Attritormühle (PE 075 Fa. Netzsch) mit 330 g Mahlkugeln (Al₂O₃; 4 - 5mm Durchmesser) in einem PE-Mahlbecher (+ Rotor) für die Dauer von 2 h bei 700 U/min dispergiert.

70 g nAnZ-Sol (entsprechen 10 g Feststoff) werden mit 35 g der obigen Al₂O₃-Suspension (entsprechen 7 g Al₂O₃) und anschließend mit 12 g der wässrigen Graphit-Suspension (entsprechen 3 g Feststoff) unter rühren vermischt.

Zur besseren Verarbeitung kann durch Zugabe von wässrigem Ammoniak ein pH-Wert im Bereich von c. 5 - 6 eingestellt werden, anschließend kann die Schlichte zur Beschichtung mittels gängiger Verfahren appliziert werden

## Patentansprüche

1. Substrat mit einer antiadhäsiven Beschichtung, erhältlich durch Auftragen einer Beschichtungszusammensetzung auf ein Substrat und Härten, wobei die Beschichtungszusammensetzung umfasst
a) Feststoffteilchen von einem Trennmittel, ausgenommen Bornitrid, und
b) ein Bindemittel umfassend oberflächenmodifizierte nanoskalige Feststoffteilchen.

2. Substrat nach Anspruch 1, **dadurch gekennzeichnet, dass** die Trennmittelteilchen eine Schichtgitterstruktur aufweisen.

3. Substrat nach einem der Ansprüche 1 und 2, **dadurch gekennzeichnet, dass** die Trennmittelteilchen ausgewählt sind aus Graphit, Graphitverbindungen, Metallsulfiden, Metallseleniden und/oder Metalltelluriden.

4. Substrat nach Anspruch 3, **dadurch gekennzeichnet, dass** die Metallsulfide oder Metallselenide aus MoS₂, WS₂, WSe₂, NbS₂, NbSe₂, TaS₂, TaSe₂, AsSbS₄ und AsAsS₄ ausgewählt sind.

5. Substrat nach Anspruch 3 oder 4, **dadurch gekennzeichnet, dass** die Trennmittelteilchen aus Graphit, fluoriertem Graphit, MoS₂ und WS₂ ausgewählt sind.

6. Substrat nach einem der Ansprüche 1 bis 5, **dadurch gekennzeichnet, dass** das Bindemittel ein Nanokomposit aus den nanoskaligen Feststoffteilchen in einem organisch modifizierten anorganischen Polykondensat oder einer Vorstufe davon umfasst.

7. Substrat nach Anspruch 6, **dadurch gekennzeichnet, dass** das organisch modifizierte anorganische Polykondensat oder dessen Vorstufe ein organisch modifiziertes anorganisches Polysiloxan oder dessen Vorstufe ist.

8. Substrat nach einem der Ansprüche 1 bis 7, **dadurch gekennzeichnet, dass** die nanoskaligen Feststoffteilchen Metalloxidteilchen oder Ruß sind.

9. Substrat nach Anspruch 8, **dadurch gekennzeichnet, dass** die nanoskaligen Feststoffteilchen aus SiO₂, TiO₂, ZrO₂, Al₂O₃, AIOOH, Y₂O₃, CeO₂, SnO₂, Eisenoxiden und/oder Ta₂O₅ ausgewählt sind.

10. Substrat nach einem der Ansprüche 1 bis 9, **dadurch gekennzeichnet, dass** die nanoskaligen Feststoffteilchen mit einem Oberflächenmodifizierungsmittel mit einem Molekulargewicht von weniger als 1.500 oberflächenmodifiziert sind.

11. Substrat nach einem der Ansprüche 1 bis 10, **dadurch gekennzeichnet, dass** die nanoskaligen Feststoffteilchen mit einem Oberflächenmodfizierungsmittel modifiziert sind, das eine Anhydridgruppe, Säureamidgruppe, Aminogruppe, SiOH-Gruppe, hydrolisierbare Reste von Silanen und/oder eine ß-Dicarbonylgruppe enthält.

12. Substrat nach einem der Ansprüche 6 bis 11, **dadurch gekennzeichnet, dass** das Nanokomposit erhältlich ist nach dem Sol-Gel-Verfahren durch Umsetzen von nanoskaligen Feststoffteilchen mit einem oder mehreren Silanen der allgemeinen Formel:
RₓSiA₍₄₋ₓ₎ (I)
worin die Reste A gleich oder verschieden sind und Hydroxylgruppen oder hydrolysierbare Gruppen darstellen, die Reste R gleich oder verschieden sind und nicht hydrolysierbare Gruppen darstellen und x den Wert 0, 1, 2, 3 hat, wobei bei mindesten 50% der Stoffmenge der Silane x ≥ 1 ist.

13. Substrat nach einem der Ansprüche 1 bis 12, **dadurch gekennzeichnet, dass** die Beschichtungszusammensetzung ferner anorganische Füllstoffe enthält.

14. Verwendung eines Substrats nach einem der Ansprüche 1 bis 13 als antiadhäsive, hochtemperaturbeständige Schicht.

15. Verwendung eines Substrats nach einem der Ansprüche 1 bis 13 als Formtrennschicht oder als tribologische Schicht.

16. Verwendung eines Substrats nach einem der Ansprüche 1 bis 13 als Formtrennschicht für das Gießen von Metallen.

## Claims

1. A substrate with an anti-adhesive coating, obtainable by applying a coating composition to a substrate and curing, said coating composition comprising
a) solid particles of a release agent excluding boron nitride, and
b) a binder comprising surface-modified nanoscale solid particles.

2. The substrate as claimed in claim 1, **characterized in that** the release agent particles have a sheet lattice structure.

3. The substrate as claimed in one of claims 1 and 2, **characterized in that** the release agent particles are selected from graphite, graphite compounds, metal sulfides, metal selenides and/or metal tellurides.

4. The substrate as claimed in claim 3, **characterized in that** the metal sulfides or metal selenides are selected from MoS₂, WS₂, WSe₂, NbS₂, NbSe₂, TaS₂, TaSe₂, AsSbS₄ and AsAsS₄.

5. The substrate as claimed in claim 3 or 4, **characterized in that** the release agent particles are selected from graphite, fluorinated graphite, MoS₂ and WS₂.

6. The substrate as claimed in one of claims 1 to 5, **characterized in that** the binder comprises a nanocomposite composed of the nanoscale solid particles in an organically modified inorganic polycondensate or a precursor thereof.

7. The substrate as claimed in claim 6, **characterized in that** the organically modified inorganic polycondensate or precursor thereof is an organically modified inorganic polysiloxane or precursor thereof.

8. The substrate as claimed in one of claims 1 to 7, **characterized in that** the nanoscale solid particles are metal oxide particles or carbon black.

9. The substrate as claimed in claim 8, **characterized in that** the nanoscale solid particles are selected from SiO₂, TiO₂, ZrO₂, Al₂O₃, AIOOH, Y₂O₃, CeO₂, SnO₂, iron oxides and/or Ta₂O₅.

10. The substrate as claimed in one of claims 1 to 9, **characterized in that** the nanoscale solid particles have been surface-modified with a surface modifier having a molecular weight of less than 1500.

11. The substrate as claimed in one of claims 1 to 10, **characterized in that** the nanoscale solid particles have been modified with a surface modifier which contains an anhydride group, amide group, amino group, SiOH group, hydrolyzable radicals of silanes and/or a β-dicarbonyl group.

12. The substrate as claimed in one of claims 6 to 11, **characterized in that** the nanocomposite is obtainable by the sol-gel process by reacting nanoscale solid particles with one or more silanes of the general formula:
RₓSiA(₄₋ₓ) (I)
in which the A radicals are the same or different and are hydroxyl groups or hydrolyzable groups, the R radicals are the same or different and are unhydrolyzable groups and x is 0, 1, 2 or 3, where x ≥ 1 in at least 50% of the amount of silanes.

13. The substrate as claimed in one of claims 1 to 12, **characterized in that** the coating composition also comprises inorganic fillers.

14. The use of a substrate as claimed in one of claims 1 to 13 as an anti-adhesive, high-temperature-resistant layer.

15. The use of a substrate as claimed in one of claims 1 to 13 as a mold release layer or as a tribological layer.

16. The use of a substrate as claimed in one of claims 1 to 13 as a mold release layer for the casting of metals.

## Revendications

1. Support muni d'un revêtement antiadhésif, que l'on peut obtenir par application d'une composition de revêtement sur un support et durcissement, cette composition de revêtement comprenant :
a) des particules solides d'un agent de démoulage qui n'est pas du nitrure de bore,
b) et un liant comprenant des particules solides de l'ordre de grandeur du nanomètre dont la surface a été modifiée.

2. Support selon la revendication 1, **caractérisé en ce que** les particules d'agent de démoulage présentent une structure réticulaire feuilletée.

3. Support selon l'une des revendications 1 et 2, **caractérisé en ce que** les particules d'agent de démoulage sont choisies parmi des particules de graphite, composés graphitiques, sulfures métalliques, séléniures métalliques et/ou tellurures métalliques.

4. Support selon la revendication 3, **caractérisé en ce que** les sulfures métalliques et les séléniures métalliques sont choisis parmi MoS₂, WS₂, WSe₂, NbS₂, NbSe₂, TaS₂, TaSe₂, AsSbS₄ et AsAsS₄.

5. Support selon la revendication 3 ou 4, **caractérisé en ce que** les particules d'agent de démoulage sont choisies parmi des particules de graphite, graphite fluoré, MoS₂ et WS₂.

6. Support selon l'une des revendication 1 à 5, **caractérisé en ce que** le liant comprend un nanocomposite constitué par les particules solides de l'ordre de grandeur du nanomètre, au sein d'un polycondensat minéral à modification organique ou d'un précurseur d'un tel polycondensat.

7. Support selon la revendication 6, **caractérisé en ce que** le polycondensat minéral à modification organique ou le précurseur de ce polycondensat est un polysiloxane minéral à modification organique ou un précurseur d'un tel polysiloxane.

8. Support selon l'une des revendications 1 à 7, **caractérisé en ce que** les particules solides de l'ordre de grandeur du nanomètre sont des particules d'oxyde métallique ou de noir de carbone.

9. Support selon la revendication 8, **caractérisé en ce que** les particules solides de l'ordre de grandeur du nanomètre sont choisies parmi des particules de SiO₂, TiO₂, ZrO₂, Al₂O₃, AIOOH, Y₂O₃, CeO₂, SnO₂, oxydes de fer et/ou Ta₂O₅.

10. Support selon l'une des revendications 1 à 9, **caractérisé en ce que** les particules solides de l'ordre de grandeur du nanomètre sont modifiées en surface avec un agent de modification de surface dont la masse moléculaire est inférieure à 1500.

11. Support selon l'une des revendications 1 à 10, **caractérisé en ce que** les particules solides de l'ordre de grandeur du nanomètre sont modifiées en surface avec un agent de modification de surface qui contient un groupe anhydride, un groupe amide d'acide, un groupe amino, un groupe SiOH, des restes hydrolysables de silanes et/ou un groupe β-dicarbonyle.

12. Support selon l'une des revendications 6 à 11, **caractérisé en ce que** le nanocomposite peut être obtenu suivant le procédé sol-gel, par réaction de particules solides de l'ordre de grandeur du nanomètre avec un ou plusieurs silanes de formule générale :
RₓSiA₍₄₋ₓ₎ (I)
dans laquelle les restes représentés par A sont identiques ou différents et sont des groupes hydroxy ou des groupes hydrolysables, les restes représentés par R sont identiques ou différents et sont des groupes non hydrolysables, et x vaut 0, 1, 2 ou 3, x ayant une valeur supérieure ou égale à 1 pour au moins 50 % de la quantité de matière correspondant aux silanes.

13. Support selon l'une des revendications 1 à 12, **caractérisé en ce que** la composition de revêtement contient en outre des charges minérales.

14. Utilisation d'un support selon l'une des revendications 1 à 13 en tant que couche antiadhésive et résistante aux températures élevées.

15. Utilisation d'un support selon l'une des revendications 1 à 13 en tant que couche de démoulage ou en tant que couche tribologique.

16. Utilisation d'un support selon l'une des revendications 1 à 3 en tant que couche de démoulage pour la fonte de métaux.
